# EUROPEAN PATENT APPLICATION

(11) **EP 2 068 524 A1**
(43) Date of publication of application: **10.06.2009**
(21) Application number: 07801076.6
(22) Date of filing: 11.09.2007
(51) Int. Cl.: H04L 29/06

(54) **A METHOD AND A SYSTEM FOR ACQUIRING THE TRANSMISSION PATH OF THE SIP MESSAGE**

(30) Priority: 15.12.2006 CN 200610168029
(71) Applicant: Huawei Technologies Co., Ltd., Shenzhen, Guangdong Province 518129 (CN)
(72) Inventor: PRAKASHA, M. R., Bangalore 560008 (IN)
(74) Representative: Thun, Clemens
(86) International application number: PCT/CN2007/070668
(87) International publication number: WO 2008/071100

(57) **Abstract**

A method for acquiring the transmission path of the SIP message includes the following steps: the caller initiates the test calling and encapsulates the path information request symbol, which represents the request for the callee to return the transmission path information of SIP message, in the calling request information; after receiving the calling request information, the callee encapsulates all of or some of the calling request information in the successful response and returns the successful response information to the caller; the caller acquires the transmission path of the calling request information according to the received successful response information. A system and a network node device for acquiring the transmission path of SIP message are provided. The method, system and the device make the caller acquire the path which the calling request information traverses in the network, and provide the necessary information for the setting of domain routing policy and the active maintenance for the provider.

## Description

This application claims the priority of a Chinese Patent application No. 200610168029.6, entitled "METHOD AND SYSTEM FOR OBTAINING TRANSMISSION PATH OF SESSION INITIATION PROTOCOL MESSAGE", filed on December 15, 2006, the content of which is incorporated herein by reference in its entirety.

### FIELD OF THE INVENTION

The present invention relates to the field of network communication technologies, and in particular, to a method and a system for obtaining a transmission path of a Session Initiation Protocol message.

### BACKGROUND OF THE INVENTION

Session Initiation Protocol (SIP) is an Internet conference and phone oriented signaling protocol established by Internet Engineering Task Force (IETF). The SIP is an application layer protocol, through which a multimedia session or call may be established, modified or terminated.

In a SIP-based network, in order to ensure normal operation of the network, network administrators need to periodically update and optimize routing policy settings in their respective domains. During the update and optimization, operations to be processed by the administrators are as follows:
(1) checking integrity of signaling and media path;
(2) detecting a loop path; and
(3) optimizing routing policy.

If the network administrator desires to optimize the routing policy on his initiative and maintain the routing policy in the network periodically, the network administrator needs to initiate a test call, and request information from the callee, so as to obtain downstream entities path which SIP messages pass through.

SIP is an application layer control protocol, through which a multimedia session or a call may be established, modified and terminated. A call in the SIP system is accomplished by three handshakes, i.e. an INVITE request, a success response and an ACK request. In particular, to initiate a call, an INVITE message is created and sent to a callee by a calling User Agent (UA). If the INVITE message is received and accepted by the callee, a success response (status code is 200) is returned. Upon reception of the success response, the caller sends an ACK request to the callee. The call is established successfully when the callee receives the ACK request.

Currently, in the header of the INVITE message, the Via field represents a path passed by a request message so far, and the caller therefore may provide information of a path passed by an incoming SIP message to the callee with this field. No field with similar information is provided in the success response message returned from the callee to the caller, i.e. the caller may not be provided with the path information of the SIP message traversal.

### SUMMARY OF THE INVENTION

An embodiment of the present invention provides a method and a system for obtaining a transmission path of a Session Initiation Protocol (SIP) message, so that the callee may provide the caller with the transmission path information of the message, which may be used by the network administrator for the network maintenance and routing optimization.

An embodiment of the invention further provides a network node apparatus for obtaining a transmission path of a SIP message, so as to obtain the transmission path of the SIP message efficiently.

For this purpose, a technical solution provided in the embodiments of the invention is as follows.

A method for obtaining a transmission path of a SIP message includes:

initiating, by a caller, a test call via a call request message carrying a path information request flag representing that a callee is required to return information of transmission path of the SIP message;

upon reception of the call request message, returning, by the callee to the caller, a success response message with the received call request message included according to the path information request flag; and

obtaining, by the caller, the transmission path of the call request message according to the received success response message.

A system for obtaining a transmission path of a SIP message includes a calling node apparatus and a called node apparatus.

The calling node apparatus includes:

a test call unit adapted to initiate a test call to the called node apparatus via a call request message carrying a path information request flag; and

a path information obtaining unit adapted to obtain the transmission path of the call request message from a success response message received by the calling node apparatus.

The called node apparatus includes:

a detecting unit adapted to detect a type of the message received by the called node apparatus; and

a message constructing unit adapted to encapsulate the call request message into the success response message sent from the called node apparatus to the calling node apparatus, when the detecting unit detects a field for requesting callee information in the call request message received by the called node apparatus.

A network node apparatus includes a message transceiver unit, a call request message constructing unit, a path information obtaining unit and a detecting unit.

The message transceiver unit is adapted to exchange information with the other node apparatus in a network, including initiating a test call to the other node apparatus and receiving a success response message from the other node apparatus.

The detecting unit is adapted to detect a type of the message received by the message transceiver unit.

The path information obtaining unit is adapted to obtain a transmission path of the message from the success response message, when the detecting unit detects the success response message.

The call request message constructing unit is adapted to construct a call request message required for initiating the test call by the message transceiver unit, and add a path information request flag into the call request message.

It can be seen from the technical solutions provided in the embodiments of the invention that in the SIP-based network, the caller initiates a test call via a call request message carrying a path information request flag to require the callee to return information about transmission path of the SIP message. The callee returns to the caller, upon reception of the call request message, a success response message including the received call request message, so that the caller may obtain the path passed by the call request message in the network, and therefore provide necessary information to the administrator for the routing policy setting and network maintenance in their respective domains.

### BRIEF DESCRIPTION OF THE DRAWINGS

Figure 1 is a flow chart of implementation of a method according to a preferred embodiment of the invention;

Figure 2 is a block diagram illustrating the principle of a system according to a preferred embodiment of the invention;

Figure 3 is a block diagram illustrating the principle of a network node apparatus according to a first embodiment of the invention;

Figure 4 is a block diagram illustrating the principle of a network node apparatus according to a second embodiment of the invention.

### DETAILED DESCRIPTION OF THE EMBODIMENTS

According to embodiments of the present invention, in a SIP-based network, a caller initiates a test call via a call request message carrying a path information request flag to require a callee to return information about transmission path of the SIP message. Upon reception of the call request message, the callee returns to the caller a success response message including the received call request message, so that the caller may obtain the path passed by the call request message in the network.

To be better understood by the skilled in the art, the present invention will be further described in detail in conjunction with the accompanying drawings together with the embodiments.

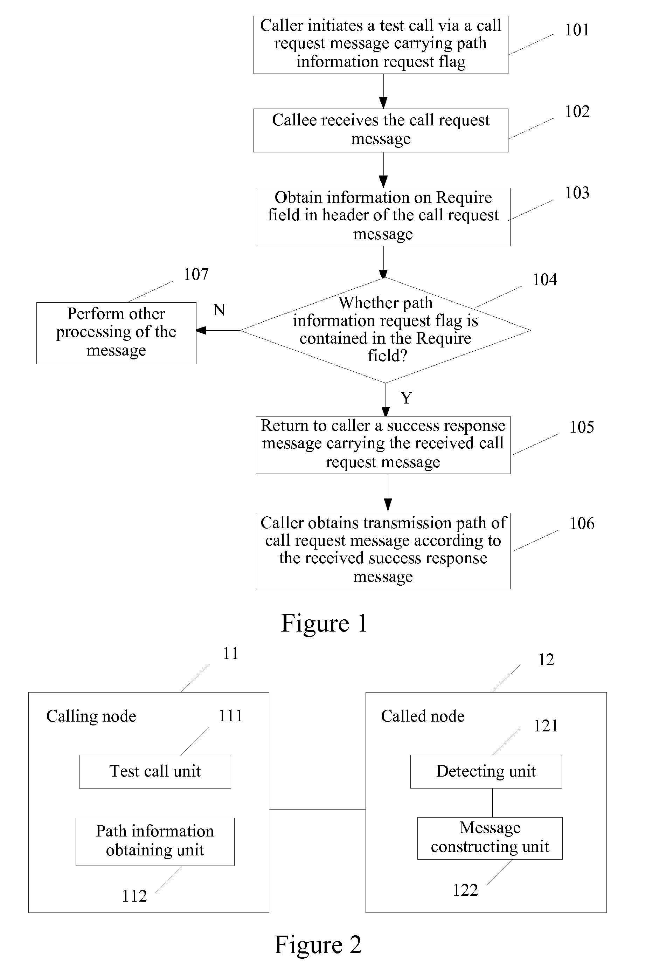

Firstly, with reference to Figure 1, a flow of implementation according to an embodiment of the invention includes the following blocks.

In block 101, a caller initiates a test call via a call request message carrying a path information request flag which represents that a callee is required to return information about transmission path of the SIP message.

An INVITE message defined in the SIP protocol may be used for initiating the test call. The INVITE message is the first message sent from the caller in a period of call processing. The information contained in the header of the SIP message identifies the caller, Call-ID, callee, call sequence number and other contents.

Additionally, the path information request flag is required to be included in the INVITE message in order to enable the callee to be aware that the routing information of the INVITE message is to be returned to the caller.

The format of a SIP request message includes three parts: a start line, a message header and a message body. In the request message, the start line is also referred to as a request line. In a response message, the start line is referred to as a status line. A method flag followed by a Uniform Resource Identifier (URI) and a protocol version is contained in the request line. A protocol version, and then a status code and some status descriptions is contained in the request line. The SIP message header consists of a plurality of field names, field values and description information. The message body is a message content part to be sent.

The SIP message header mainly includes the fields of From, To, Call-ID, Cseq, Via, Contact and Require. All of the requests and responses should include the From field indicating an initiator of the request and the To field indicating a receiver of the request. Call-ID is used to uniquely identify a specific invitation or to identify all registrations of a customer. Cseq is a sequence number of a message and the Contact filed gives an address for communicating with a user thereafter.

The Via field indicates a path passed by the request message to prevent from causing a loop path and ensure a same path is selected for the response message and the request message. A user initiating a request should insert a hostname or a network address of the user into the Via field of the request message. During forwarding of the request message, each proxy server has to add the proxy's address as a new Via field in front of the existing Via field. User agent informs the proxy server of the options to be supported in the request processing via option tags listed in the Require field. The Require field is optional, but may not be ignored.

Therefore, in the embodiment of the invention, the header of the INVITE message is provided with the path information request flag for representing that the callee is required to return the information about transmission path of the SIP message.

Furthermore, for the purpose that other message processing at the callee may not be impacted by the test call, a sipdiag field may be provided in the header, Supported, of the Require field for indicating that this call is a test call, so that the callee may return a success response message carrying the received call request message to the caller immediately according to the sipdiag.

In block 102, the callee receives the call request message.

In block 103, information of Require field is obtained from the header of the call request message.

In block 104, it is determined whether the path information request flag is included in the Require field; if the path information request flag is included in the Require field, block 105 is performed; otherwise, if the path information request flag is not included in the Require field, block107 is performed.

In block 105, the success response message, in which the received call request message is included, is returned to the caller.

In the embodiment of the invention, the received call request message may be included in the message body of a 2XX message to be sent to the caller, so that the caller may obtain the transmission path of the call request message according to this message.

In block 106, the caller obtains the transmission path of the call request message according to the received success response message.

In block 107, other processing for the message is performed.

By way of an example, the format of the message in the period of the test call is described.

INVITE message:
INVITE sip:bob@example.com SIP/2.0
Via: SIP/2.0/TCP pc33.atlanta.com;branch=z9hG4bKnashds8
Max-Forwards: 70
From: Alice <sip:alice@atlanta.example.com>;tag=9fxced76s1
To: Bob <sip:bob@example.com>
Call-ID:3848276298220188511@client-alice.example.com
CSeq: 1 INVITE
Contact: <sip:alice@client.atlanta.example.com>
Supported: sipdiag
Require: sipdiag
Content-Type: application/sdp
Content-Length: ...
v=0
o=user 2890844526 2890844526 IN IP4 client.example.com
s=Session SDP
c=IN IP4 client.example.com
t=3034423619 0
m=audio 49170 RTP/AVP 0
a=rtpmap:0 PCMU/8000

Require field in the above request message is sipdiag, which is the path information request flag. The callee returns the success response message to the caller upon reception of the call request message which is included in the success response message.

Response message (200 OK):
SIP/2.0 200 OK
Via: SIP/2.0/TCP server10.biloxi.com;branch=z9hG4bK4b43c2ff8.1
Via: SIP/2.0/TCP \
   bigbox3.site3.atlanta.com;branch=z9hG4bK77ef4c2312983.1 \
   ;received=192.0.2.2
Via: SIP/2.0/TCP pc33.atlanta.com;branch=z9hG4bKnashds8 \
   ;received=192.0.2.1
   From: Alice <sip:alice@example.com>;tag=9fxced76s1
   To: Bob <sip:bob@example.com>;tag=8321234356
   Call-ID: 3848276298220188511@client-alice.example.com
   CSeq: 1 INVITE
   Contact: <sip:bob@client.biloxi.example.com>
Content-Type: multipart/mixed; boundary="boundaryl"
Content-Length: ...

### --boundaryl

Content-Type: application/sdp
v=0
o=alice 2890844527 2890844527 IN IP4 example.com
s=Session SDP
c=IN IP4 example.com
t=3034423619 0
m=audio 3456 RTP/AVP 0
a=rtpmap:0 PCMU/8000

### --boundaryl

Content-Type: message/sipfrag
INVITE sip:bob@client.biloxi.example.com SIP/2.0
Via: SIP/2.0/TCP server10.biloxi.com;branch=z9hG4bK4b43c2ff8.1
Via: SIP/2.0/TCP \
   bigbox3.site3.atlanta.com;branch=z9hG4bK77ef4c2312983.1\ ;received=192.0.2.2
Via: SIP/2.0/TCP pc33.atlanta.com;branch=z9hG4bKnashds8\ ;received=192.0.2.1
   Max-Forwards: 68
   From: Alice <sip:alice@atlanta.example.com>;tag=9fxced76sl
   To: Bob <sip:bob@example.com>
   Call-ID:3848276298220188511@client-alice.example.com
   CSeq: 1 INVITE
   Contact: <sip :alice@client.atlanta.example.com>
Supported: sipdiag
   Require: sipdiag
   Content-Type: application/sdp
   Content-Length: ...

### --boundary1-

The type of the message body of the above response message is sipfrag, which contains the INVIATE message received by the callee.

It can be seen from the above embodiment that the called node apparatus is allowed to accept the request from the caller without waiting for explicit allowance from the callee, and therefore, the administrator which the caller belongs to may obtain the information about the path passed by the SIP request message without interrupting the callee. Upon receiving the INVITE message, the called User Agent (UA) analyses information of the "Via" in the INVITE message to obtain the required path information. If the path is considered as not an optimal path, the administrator may modify and optimize the routing policy in the domain, and therefore ensure an unblocked route of the call in the network.

Referring to Figure 2, a block diagram illustrating the principle of a system according to a preferred embodiment of the invention is shown.

In this embodiment, the system of the invention includes a calling node apparatus 11 and a called node apparatus 12. In practice, between the calling node apparatus 11 and the called node apparatus 12, there may be other node apparatus, through which the message exchanged between the calling node apparatus 11 and the called node apparatus 12 is forwarded.

The calling node apparatus 11 includes a test call unit 111 and a path information obtaining unit 112. The test call unit 111 is adapted to initiate a test call to the called node apparatus 12 via a call request message carrying path information request flag representing that the callee is required to return information about the transmission path of a SIP message. The path information obtaining unit is adapted to obtain the transmission path of the call request message from a success response message received by the calling node apparatus.

The called node apparatus 12 includes a detecting unit 121 and a message constructing unit 122. The detecting unit 121 is adapted to detect the type of the call request message received by the called node apparatus, and the message constructing unit 122 is adapted to encapsulate the call request message into the success response message sent from the called node apparatus to the calling node apparatus, when the detecting unit detects a field for requesting callee information in the call request message received by the called node apparatus.

The operation process of the system is as follows.

If there is a need for the calling node apparatus to obtain the transmission path of the SIP message, the test call unit initiates a test call to the called node apparatus via a call request message carrying a path information request flag. Taking the INVITE message described above in the embodiment of the invention for example, the path information request flag is included in the header of the INVITE message representing that the callee is required to return the transmission path of the SIP message. In addition, for the purpose that other message processing at the callee may not be impacted by the test call, the sipdiag field in the header, Supported, of the Require field is configured as a test call mode, so that the called node apparatus may return a success response message containing the received call request message to the caller according to the sipdiag. The calling node apparatus may initiate the test call in schedule or periodically as required.

When the called node apparatus receives the call request message, the detecting unit 121 detects the type of the message received by the called node apparatus and obtains the information in the header of the message. If determining that a test call is sent and the path information is required by the caller, the detecting unit 121 notifies the message constructing unit 122 to encapsulate the call request message into the success response message sent from the called node apparatus to the calling node apparatus, e.g. to encapsulate the entire INVITE message or simply the information of the Via field into the message body of the success response message. Then the called node apparatus sends the success response message to the calling node apparatus.

When the calling node apparatus receives the success response message from the called node apparatus, the path information obtaining unit 112 obtains the transmission path of the call request message from the success response message, i.e. the information of the Via field in the INVITE message. In this way, the calling node apparatus may obtain the transmission path of the call request message, thus provide the necessary information to the network administrator for network maintenance.

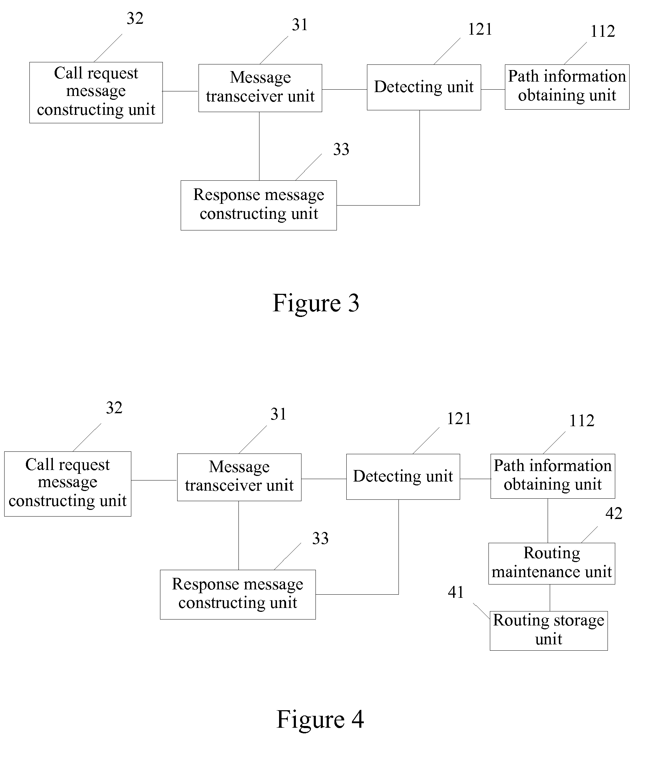

Figure 3 is a block diagram illustrating the principle of a network node apparatus according to a first embodiment of the invention.

The apparatus includes a message transceiver unit 31, a call request message constructing unit 32, a path information obtaining unit 112 and a detecting unit 121. The message transceiver unit 31 is adapted to exchange information with the other node apparatus in a network, including initiating a test call to the other node apparatus and receiving a success response message from the other node apparatus. The detecting unit 121 is adapted to detect the type of message received by the message transceiver unit. The path information obtaining unit 112 is adapted to obtain the transmission path of the message from the success response message, when the detecting unit 121 detects the success response message. The call request message constructing unit 32 is adapted to construct a call request message required for initiating the test call by the message transceiver unit, and add a field for requesting the information of the callee into the call request message.

Furthermore, in this embodiment of the invention, the apparatus further includes a response message constructing unit 33 adapted to construct the success response message to be returned by the message transceiver unit carrying the entirety or part of the call request message, when the detecting unit detects the call request message and the call request message contains the field for requesting the information of the callee.

The node apparatus may act as a caller for initiating a call to the other node apparatus in the network, or as a callee for receiving a call from the other node apparatus in the network.

Following shows a detailed process in which the node apparatus obtains, as a caller, the transmission path of a SIP message or provides, as a callee, the transmission path of a SIP message to the other node apparatus.

If there is a need for the node apparatus to initiate a test call, the call request message constructing unit constructs a call request message first. During the construction of the call request message, a path information request flag is required to be added into the call request message. For the purpose that no impact occurs on the destination node apparatus, the sipdiag field in the INVITE message may be configured as the test call mode, the implementation of which may refer to the above description of the method according to the embodiment of the invention. Then, the constructed call request message is transferred to the message transceiver unit which sends the call request message to the called node apparatus for initiating the test call.

When the message transceiver unit of the called node apparatus receives the call request message, the detecting unit of the called node apparatus detects the message. If the message is determined as a test call message containing the path information request flag, the detecting unit notifies the response message constructing unit of the called node apparatus to construct the success response message containing the entirety or part of the call request message. Then, the success response message is transferred to the message transceiver unit, which then returns the message to the node apparatus initiating the test call.

The message transceiver unit of the node apparatus initiating the test call receives the success response message from the called node apparatus. When detecting the success response message, the detecting unit of the node apparatus initiating the test call notifies the path information obtaining unit to obtain the information about transmission path of the call request message from the success response message. In this way, the objective of this test call is achieved.

Figure 4 is a block diagram illustrating the principle of a network node apparatus according to a second embodiment of the invention.

Figure 4 differs from Figure 3 in that, in this embodiment, a routing storage unit 41 and a routing maintenance unit 42 are further provided. The routing storage unit 41 is adapted to store routing information in the network, and the routing maintenance unit 42 is connected to the path information obtaining unit for updating the routing information stored in the routing storage unit according to the information about the transmission path of the call request message obtained by the path information obtaining unit.

In practice, some routing updating and optimizing policies may be predefined, so that the routing maintenance unit 32 may use these policies to update the routing information stored in the routing storage unit automatically, to ensure an unblocked rout in the network and provide better service to users.

It should be noted that, in the above embodiments, the field for requesting the information of the callee is the path information request flag.

Although the invention is described with reference to the embodiments, it should be understood by those skilled in the art that many variations and changes may be made without departing from the spirit of the invention. It is intended to include all these variations and changes in the accompanied claims without departing from the spirit of the invention.

## Claims

1. A method for obtaining a transmission path of a Session Initiation Protocol (SIP) message, comprising:
initiating, by a caller, a test call via a call request message carrying a path information request flag representing that a callee is required to return information of transmission path of the SIP message;
upon reception of the call request message, returning, by the callee to the caller, a success response message with the received call request message entirely of partially included according to the path information request flag;
obtaining, by the caller, the transmission path of the call request message according to the received success response message.

2. The method according to claim 1, wherein
the call request message is an SIP INVITE message, and the path information request flag is contained in a header of the INVITE message.

3. The method according to claim 2, further comprising:
configuring test call mode indication information in the header of the INVITE message.

4. The method according to claim 3, wherein a Require field is used for the path information request flag, and a sipdiag field is used for the test call mode indication information.

5. The method according to claim 3, further comprising:
upon receiving the call request message, obtaining, by the callee, the sipdiag field information in the header of the call request message before the callee returns the success response message to the caller;
returning the constructed success response message to the callee if the sipdiag field information represents the test call mode.

6. The method according to claim 2, further comprising:
upon receiving the call request message, determining, by the callee, that there exists the path information request flag in the Require field information before the callee returns the success response message to the caller.

7. The method according to any one of claims 1-6, wherein the success response message is an SIP 200 OK message.

8. The method according to claim 1, wherein
the call request message received by the callee is contained in a message body of the success response message entirely or partially.

9. A system for obtaining a transmission path of a Session Initiation Protocol (SIP) message, comprising a calling node apparatus and a called node apparatus, wherein
the calling node apparatus comprises:
a test call unit adapted to initiate a test call to the called node apparatus via a call request message carrying a path information request flag; and
a path information obtaining unit adapted to obtain the transmission path of the call request message from a success response message received by the calling node apparatus;
and the called node apparatus comprises:
a detecting unit adapted to detect a type of the message received by the called node apparatus; and
a message constructing unit adapted to encapsulate the call request message into the success response message sent from the called node apparatus to the calling node apparatus, when the detecting unit detects a field for requesting callee information in the call request message received by the called node apparatus.

10. A network node apparatus, comprising a message transceiver unit, a call request message constructing unit, a path information obtaining unit and a detecting unit, wherein
the message transceiver unit is adapted to exchange information with other node apparatus in a network, initiate a test call to the other node apparatus and receive a success response message from the other node apparatus;
the detecting unit is adapted to detect a type of the message received by the message transceiver unit;
the path information obtaining unit is adapted to obtain a transmission path of the message from the success response message, when the detecting unit detects the success response message; and
the call request message constructing unit is adapted to construct a call request message required for initiating the test call by the message transceiver unit, and add a path information request flag into the call request message.

11. The network node apparatus according to claim 10, further comprising,
a response message constructing unit adapted to construct the success response message to be returned by the message transceiver unit and encapsulate the call request message in the success response message, when the detecting unit detects the call request message and the call request message contains the path information request flag.

12. The network node apparatus according to claim 10 or 11, further comprising,
a routing storage unit adapted to store routing information in the network; and
a routing maintenance unit connected to the path information obtaining unit, adapted to update the routing information stored in the routing storage unit according to the information about transmission path of the call request message obtained by the path information obtaining unit.
